(19) Europäisches Patentamt
European Patent Office
Office européen des brevets

(11) EP 2 118 618 B1

(12) # EUROPÄISCHE PATENTSCHRIFT

(45) Veröffentlichungstag und Bekanntmachung des Hinweises auf die Patenterteilung:
**12.05.2010 Patentblatt 2010/19**

(21) Anmeldenummer: **08708207.9**

(22) Anmeldetag: **25.01.2008**

(51) Int Cl.:
***G01B 21/04*** *(2006.01)*

(86) Internationale Anmeldenummer:
**PCT/EP2008/050880**

(87) Internationale Veröffentlichungsnummer:
**WO 2008/098826 (21.08.2008 Gazette 2008/34)**

(54) **VERFAHREN ZUM ERMITTELN VON MESSSTELLEN**

METHOD FOR DETERMINING MEASURING POINTS

PROCÉDÉ DE DÉTERMINATION DE POINTS DE MESURE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.02.2007 DE 102007007574**

(43) Veröffentlichungstag der Anmeldung:
**18.11.2009 Patentblatt 2009/47**

(73) Patentinhaber: **KUKA Roboter GmbH**
**86165 Augsburg (DE)**

(72) Erfinder: **SEDLMAYR, Andreas**
**86316 Friedberg (DE)**

(74) Vertreter: **Patentanwälte**
**Funk & Böss GbR**
**Sigmundstraße 1**
**80538 München (DE)**

(56) Entgegenhaltungen:
**EP-A- 1 431 706 WO-A-2004/071717**
**JP-A- 6 307 842**

- **XIONG Z H ET AL: "Workpiece localization and computer aided setup system" PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001; [IEEE/RSJ INTERNATIONAL CONFERENCE ON INTELLIGENT ROBOTS AND SYSTEMS], NEW YORK, NY : IEEE, US, Bd. 2, 29. Oktober 2001 (2001-10-29), Seiten 1141-1146, XP010571850 ISBN: 978-0-7803-6612-1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zum Ermitteln von Messstellen an einem Objekt.

Um die Lage, d.h. die Position und Orientierung eines Objekts bezüglich eines Bezugskoordinatensystems zu ermitteln, offenbart die WO 2004/071717 A1 eine Mehrzahl von Messpunkten auf der Oberfläche des Objekts zu registrieren und zu speichern, die Orientierung und die Position eines CAD-Modells des Objekts relativ zu einem Koordinatensystem des Industrieroboters durch Korrelation der Messpunkte in Bezug zum Modell zu bestimmen und für zumindest einige der Messpunkte und den entsprechenden Punkten im Modell eine sich ergebende Abweichung zu ermitteln.

In der JP-A-6 307 842 wird die Lage eines Objektes mit drei zueinander orthogonalen Flächen anhand von je zwei Messpunkten je Fläche bestimmt.

Demnach ist es nötig, mehrere Messstellen am Objekt anzufahren bzw. überhaupt zunächst geeignete und genügend Messstellen zu ermitteln.

Die Aufgabe der Erfindung ist es, ein Verfahren zum Ermitteln von Messstellen an einem Objekt für ein Bestimmen der Lage des Objekts bezüglich eines Bezugskoordinatensystems derart anzugeben, dass in relativ einfacher Weise geeignete Messstellen ermittelt werden können.

Die Aufgabe der Erfindung wird gelöst durch ein Verfahren zum Ermitteln von Messstellen an einem Objekt, aufweisend folgende Verfahrensschritte:

a) Auswählen von mehreren Messstellen eines physikalischen Objekts in einem grafischen Rechnermodell des physikalischen Objekts solange, bis genügend Messstellen ausgewählt sind, um die Lage des Objekts bezüglich eines Bezugskoordinatensystems zu ermitteln, wobei automatisch ein Rechnerprogramm ermittelt, wenn genügend Messstellen ausgewählt sind,

b) nachdem für das Ermitteln der Lage des Objekts genügend Messstellen ausgewählt wurden, Auswählen einer weiteren Messstelle des Objekts im grafischen Rechnermodell und automatisches Überprüfen mittels des Rechnerprogramms, ob durch die weitere Messstelle die Lage des Objekts bezüglich des Bezugskoordinatensystem genauer bestimmbar ist,

c) Berücksichtigen der weiteren Messstelle für die Bestimmung der Lage des Objekts, wenn durch die weitere Messstelle die Lage besser bestimmbar ist, und

d) Wiederholen der Verfahrensschritte b) und c) solange, bis die Lage des Objekts besser als mit einer vorgegebenen Toleranz bestimmbar ist.

Bei bestimmen Anwendungen ist es nötig, die Lage, d.h. die Position und die Orientierung eines Objekts bezüglich eines Bezugskoordinatensystems zu ermitteln. Ein Beispiel einer solchen Anwendung ist die Bestimmung der Lage eines Objekts relativ zu einem Industrieroboter bzw. zu dessen Bezugskoordinatensystem. Ein Objekt ist beispielsweise ein Werkstück, das mit dem Industrieroboter bearbeitet werden soll.

Die Lage des Objekts kann mittels der Messstellen am Objekt bestimmt werden, die für die Bestimmung der Lage als solches beispielsweise mit Sensoren, z.B. Laserabstandssensoren, Laserscannern, Messstiften oder Kameras abgetastet oder angefahren werden.

Das erfindungsgemäße Verfahren ist darauf gerichtet, überhaupt geeignete und insbesondere möglichst gut geeignete Messstellen in ausreichender Anzahl am Objekt auszuwählen bzw. zu ermitteln, damit die Bestimmung der Lage überhaupt durchgeführt werden kann.

Dies wird erfindungsgemäß mit Hilfe des Rechnermodells vom physikalischen Objekt durchgeführt.

Das Rechnermodell ist insbesondere ein CAD (Computer Aided Design) Rechnermodell, das nach einer Variante des erfindungsgemäßen Verfahrens in einer Steuervorrichtung eines Industrieroboters gespeichert ist. Das Rechnermodell ist beispielsweise ein Drahtgittermodell, das im Englischen als "Wireframemodel" bezeichnet wird.

Erfindungsgemäß werden die Messstellen am Rechnermodell ausgewählt. Dies ist beispielsweise möglich, indem das Rechnermodell mittels einer Anzeigevorrichtung angezeigt wird und anschließend eine Bedienperson mittels einer Eingabevorrichtung, beispielsweise einer Rechnermaus, Stellen am Rechnermodell als Messstellen markiert.

Damit die Bedienperson nur solche Stellen am Rechnermodell markiert, die überhaupt eine Messvorrichtung, z.B. ein Sensor, am physikalischen Objekt erreichen kann, kann es vorgesehen sein, bereits mögliche Messstellen am Rechnermodell hervorzuheben oder eine Liste möglicher Messstellen bereitzustellen, aus der die Bedienperson potenzielle Messstellen auswählen kann.

Erfindungsgemäß werden zunächst genügend Messstellen am Rechnermodell ausgewählt, sodass prinzipiell die Lage des Objekts bezüglich des Bezugskoordinatensystems ermittelt werden kann. Dies wird mittels des Rechnerprogramms automatisch überprüft, sodass die Bedienperson zuverlässig informiert werden kann, wenn ausreichend viele Messstellen ausgewählt sind. Kann sich das Objekt in sechs Freiheitsgraden bewegen, dann müssen die Messstellen geeignet sein, die Lage des Objekts in sechs Freiheitsgraden zu bestimmen. Kann das Objekt z.B. aufgrund einer vorgegebenen Position oder Orientierung bezüglich weniger als sechs Freiheitsgraden bewegt werden, dann werden entsprechend weniger Messstellen benötigt, um die Lage des Objekts zu bestimmen.

Nach einer Ausführungsform des erfindungsgemäßen Verfahrens wird die ausreichende Anzahl ausgewählter Messstellen überprüft, indem zunächst folgende Jacobimatrix *J* ermittelt wird:

$$J = \frac{\partial \begin{pmatrix} S_1 \cdot F(\vec{x}_0, \vec{x}data_1) \\ S_2 \cdot F(\vec{x}_0, \vec{x}data_2) \\ \ldots \\ S_n \cdot F(\vec{x}_0, \vec{x}data_n) \end{pmatrix}}{\partial x}$$

wobei

$$F(\vec{x}_0, \vec{x}data) = (S \;\; 0)\left( T(x) \cdot \begin{pmatrix} xdata_1 \\ xdata_2 \\ xdata_3 \\ 1 \end{pmatrix} \right) = \begin{pmatrix} Tx \\ Ty \\ Tz \end{pmatrix} + R(Rx, Ry, Rz) \cdot \vec{x}data$$

wobei *T* eine Transformationsmatrix ist, die Koordinaten des Objekts in Koordinaten eines Koordinatensystems transformiert, das der für die Messstellen des Objekts verwendeten Messvorrichtung zugeordnet ist, $\vec{x}data_{1;2;..n}$ die Koordinaten der im Rechnermodell bis jetzt ausgewählten Messstellen sind, *S* eine Selektionsmatrix ist, die von Messachsen der verwendeten Messvorrichtung abhängen,

$$\begin{pmatrix} Tx \\ Ty \\ Tz \end{pmatrix}$$

die Translation der homogenen Transformationsmatrix *T* beschreibt, *R* eine Rotationsmatrix darstellt, die die Rotation der Transformationsmatrix *T* beschreibt, *n* die Anzahl ausgewählte Messstellen und

$$\vec{x}_0 = \begin{pmatrix} 0 \\ 0 \\ 0 \\ 0 \\ 0 \\ 0 \end{pmatrix}$$

ist.

Die Werte der obengenannten Jacobimatrix J entsprechen keiner richtigen Metrik (d.h. einheitlichen Physikalischen Bedeutung) wegen der Kombination von Translationsgrößen und Rotationsgrößen in der Variablen x. Zur Ableitung von sinnvollen Kennzahlen aus der Jacobimatrix, wie z.B. der Kondition, wird eine in der Literatur bekannte Gewichtung von J mit einer invertierbaren Diagonalmatrix vorgenommen. Im nachstehenden Text ist die Jacobimatrix J in einer geeigneten gewichteten Form zu verstehen.

Anschließend wird der Rang des Jacobimatrix *J* überprüft und solange zusätzliche Messstellen ausgewählt, bis der Rang der Jacobimatrix *J* wenigstens gleich der Anzahl möglicher Freiheitsgrade des Objekts entspricht.

Müssen z.B. alle sechs Freiheitsgrade des Objekts bestimmt werden, dann muss der Rang der Jacobimatrix *J* wenigstens sechs sein, damit die Lage des Objekts relativ zum Bezugskoordinatensystem bestimmt werden kann.

Diese Variante des erfindungsgemäßen Verfahrens geht von folgender Überlegung aus:

Um die Lage des Objekts relativ zum Bezugskoordinatensystem zu erhalten, kann man eine Zielfunktion $f(\vec{x})$ eines nichtlinearen überbestimmten Optimierungsproblems aufgrund der nicht unbedingt geforderten 3 DoF ("degree of freedom") Messwerte der Messvorrichtung im Koordinatensystem der Messvorrichtung darstellen, da bei Messpunkten $\vec{y}data_i$ am Objekt mit weniger als 3 DoF keine Transformation in ein anderes 3D-Koordinatensystem möglich ist.

Somit ergibt sich folgendes Optimierungsproblem:

$$\min_{x} f(\vec{x})$$

wobei

$$f(\vec{x}) = \sum_{i} v_i^T v_i$$

mit

$$v_i = S_i \cdot F(\vec{x}, \vec{x}data_i) - \vec{y}data_i$$

und

$$F(\vec{x}, \vec{x}data) = (S \;\; 0)\left( T(x) \cdot \begin{pmatrix} xdata_1 \\ xdata_2 \\ xdata_3 \\ 1 \end{pmatrix} \right) = \begin{pmatrix} Tx \\ Ty \\ Tz \end{pmatrix} + R(Rx, Ry, Rz) \cdot \vec{x}data$$

wobei

$$\vec{x} = \begin{pmatrix} Tx \\ Ty \\ Tz \\ Rx \\ Ry \\ Rz \end{pmatrix}$$

6D Koordinaten in der sogenannten Fixed Angle Konvention sind.

Bei der Berechnung der Norm $\min_{x} f(\vec{x})$ wird z.B. der Abstand zwischen dem ausgewählten Punkt zu einer Ebene, eine Länge eines 3D Vektors Punkt-Punkt oder Punkt-Linie herangezogen.

Die Selektionsmatrix *S* ergibt sich aus der gewählten Messvorrichtung.

Handelt es sich bei der Messvorrichtung um eine Messvorrichtung, die einen dreidimensionalen Messwert *(d=3)* ermittelt, wie dies beispielsweise beim Roboter Touch-Up der Fall ist, dann lautet die Selektionsmatrix folgendermaßen:

$$S = \begin{pmatrix} 1 & 0 & 0 \\ 0 & 1 & 0 \\ 0 & 0 & 1 \end{pmatrix}$$

Die entsprechenden Koordinaten der Messstelle am Objekt lauten:

$$\vec{y}data = \begin{pmatrix} x_m \\ y_m \\ z_m \end{pmatrix}$$

Handelt es sich bei der Messvorrichtung um eine Messvorrichtung, die einen zweidimensionalen Messwert *(d=2)* ermittelt, wie dies beispielsweise bei einer 2D-Kamera als Messvorrichtung der Fall ist, dann lautet die Selektionsmatrix folgendermaßen:

$$S = \begin{pmatrix} 1 & 0 & 0 \\ 0 & 1 & 0 \end{pmatrix}$$

Die entsprechenden Koordinaten der Messstelle am Objekt lauten:

$$\vec{y}data = \begin{pmatrix} x_m \\ y_m \end{pmatrix}$$

Handelt es sich bei der Messvorrichtung um eine Messvorrichtung, die einen eindimensionalen Messwert *(d=1)* ermittelt, wie dies beispielsweise bei einem Laserabstandssensor der Fall ist, dann lautet die Selektionsmatrix folgendermaßen:

$$S = \begin{pmatrix} 1 & 0 & 0 \end{pmatrix}$$

Die entsprechende Koordinate der Messstelle am Objekt lautet:

$$\vec{y}data = z_m$$

Somit lässt sich die Jacobimatrix *J* erstellen:

$$J = \frac{\partial \begin{pmatrix} S_1 \cdot F(\vec{x}, \vec{x}data_1) \\ S_2 \cdot F(\vec{x}, \vec{x}data_2) \\ \dots \\ S_n \cdot F(\vec{x}, \vec{x}data_n) \end{pmatrix}}{\partial x}$$

mit Anzahl Zeilen bzw. 1D Messwerte

$$m = \sum_i d_i \ .$$

Mit einer Zerlegung der Jacobimatrix *J* können ohne vorherige Messungen am Objekt Bewertungen vorgenommen werden, d.h. für das erfindungsgemäße Verfahren, also für das Ermitteln der geeigneten Messstellen am Objekt brauchen keine Messungen am Objekt durchgeführt werden, weshalb die Messpunkte $\vec{ydata_i}$ am Objekt auch nicht benötigt werden.

Somit ist es möglich, die Eingangsgröße $\vec{x}$ für die Jacobimatrix *J* auf $\vec{x_0}$ (Einheitstransformation) zu setzen, sodass die Koordinatenachsen des Bezugskoordinatensystem ins Koordinatensystem des Objekts fallen.

Anschließend kann die Jacobimatrix analysiert werden, um z.B. eine Information darüber zu erhalten, ob bereits genügend Messstellen ausgewählt wurden, damit die Lage des Objekts bestimmt werden kann. Dies erfolgt insbesondere über eine Information des Ranges der Jacobimatrix *J*.

Nachdem genügend Messstellen ausgewählt wurden, sodass die Lage des Objekts bestimmbar ist, wird erfindungsgemäß die weitere Messstelle ausgewählt, um gegebenenfalls die Genauigkeit der Bestimmung der Lage zu verbessern. Wenn durch die weitere Messstelle die Bestimmung der Lage verbessert werden kann, dann wird diese Messstelle ebenfalls für die Bestimmung der Lage berücksichtigt. Andernfalls wird diese weitere Messstelle nicht berücksichtigt. Des Weiteren werden weitere Messstellen ausgewählt, bis die Lage des Objekts mit der vorgegebenen Toleranz bestimmt werden kann.

Nach einer Ausführungsform des erfindungsgemäßen Verfahrens wird hierfür die sogenannte Kondition der geometrischen Punkteanordnung der Jacobimatrix *J* vor der Auswahl der weiteren Messstelle mit der Kondition der Jacobimatrix *J* nach der Auswahl der weiteren Messstelle verglichen. Hat sich die Kondition verkleinert, dann wird die relevante weitere Messstelle berücksichtigt.

Bei der Kondition wird der größte Singulärwert mit dem kleinsten Singulärwert der Jacobimatrix *J* ins Verhältnis gesetzt. Die bestmöglichste Kondition ist theoretisch 1,0, d.h. bei orthogonalen Messstellen. Schlechtere Konditionen gehen theoretisch ins Unendliche.

Erfindungsgemäß werden die Verfahrensschritte b) und c) solange wiederholt, bis die Lage des Objekts besser als mit der vorgegebenen Toleranz bestimmbar ist. Dies ist nach einer Variante des erfindungsgemäßen Verfahrens gegeben, wenn die Kondition der Jacobimatrix *J* einen vorgegebenen Wert unterschreitet. Dieser vorgegebene Wert liegt vorzugsweise im Bereich zwischen 2,0 und 10,0 und ist nach einer Ausführungsform des erfindungsgemäßen Verfahrens 5,0.

Nach einer Ausführungsform des erfindungsgemäßen Verfahrens weist dieses folgende weitere Verfahrensschritte auf:

e) nachdem genügend Messstellen ermittelt wurden, sodass die Lage des Objekts besser als mit der vorgegebenen Toleranz bestimmbar ist, Ermitteln mittels des Rechnerprogramms, ob mittels einer zum Vermessen des Objekts mittels der Messstellen vorgesehenen Messvorrichtung die Lage des Objekts innerhalb einer vorgegebenen Messtoleranz bestimmbar ist, und

f) Wiederholen der Verfahrensschritte b) bis e), bis die Lage des Objekts mittels der Messvorrichtung innerhalb der vorgegebenen Messtoleranz bestimmbar ist.

Gemäß dieser Variante wird also auch die Messtoleranz der verwendeten Messvorrichtung für das Ermitteln günstiger Messstellen herangezogen.

Alternativ kann die Toleranz des Verfahrensschrittes a) auch die Messtoleranz der vorgesehenen Messvorrichtung sein.

Gemäß einer weiteren Variante des erfindungsgemäßen Verfahrens werden die Messstellen und die berücksichtigten weiteren Messstellen angezeigt und/oder ausgeben.

Nach einer weiteren Ausführungsform des erfindungsgemäßen Verfahrens werden die Messstellen und die weiteren berücksichtigten Messstellen nach messtechnischer Relevanz geordnet ausgegebenen und/oder angezeigt.

Anschließend ist es noch möglich, die am besten geeigneten Messstellen und berücksichtigten weiteren Messstellen für die Messung am Objekt auszuwählen, um die ausgegebenen und/oder angezeigten Messstellen und weiteren Messstellen nach messtechnischer Relevanz zu ordnen.

Dies ist z.B. gemäß Folgendem möglich:

Es wird beispielsweise die Jacobimatrix *J* mittels Dreieckszerlegung mit Zeilenzuordnung zerlegt, beispielsweise mittels QR-Zerlegung nach Householder, wodurch eine $m \times m$ Permutationsmatrix *P* mit *m* Zeilenvertauschungen nach Kriterien der numerischen Stabilität entsteht. Die Kondition der Jacobimatrix bleibt unverändert, sodass

$$Q \cdot R \cdot P = J$$

ist, wobei *Q* und *R* ebenfalls Matrizen sind.

Aus der Permutationsmatrix *P* können die zur optimalen Lösung notwendigen eindimensionalen Messwerte der (1D, 2D oder 3D) Messstellen bestimmt werden. Die übrigen Messwerte sind nicht nötig, um die Transformation zu berechnen. Sie können aber wegen den praxisbedingten Messungsgenauigkeiten zu einem besseren Ergebnis aufgrund der Redundanz führen.

Die Zeilennummer i der notwendigen Gleichungen, d. h. der Index der notwendigen eindimensionalen Messwerte, kann der Permutationsmatrix *P* entnommen werden. Daraus ergibt sich die Liste der geeigneten Messstellen.

Nach einer Variante des erfindungsgemäßen Verfahrens werden die Messstellen und eine Mehrzahl von weiteren Messstellen aus einer Mehrzahl möglicher Messstellen vor dem Durchführen des Verfahrensschrittes a) ausgewählt.

Die Messstellen und die weitere Messstelle können folgende Korrespondenzen aufweisen: Punkt zu Punkt, Punkt zu Ebene, Punkt zu Kante und/oder Punkt zu Linie.

Das erfindungsgemäße Verfahren unterstützt eine Bedienperson beim Konfigurieren von Messstellen z.B. zur Werkstücklagevermessung. Dazu kann das erfindungsgemäße Verfahren auch derart ausgeführt sein, dass die Bedienperson bei jeder neuen ausgewählten Messstelle folgende Informationen abfragen:

- Ist die Anzahl der Messstellen zur Ermittlung der Werkstücklage (insbesondere 6 Freiheitsgrade) ausreichend?
- Welche der ausgewählten Messstellen sind überflüssig/redundant bzw. welche führen zu einer messtechnisch besseren oder sogar bestmöglichen Werkstücklageermittlung?
- Welcher Freiheitsgrad oder welche Freiheitsgrade der Werkstücklage ist noch nicht oder messtechnisch noch nicht ausreichend genau bestimmbar? Eine visuelle Anzeige durch "sweepen" des Rechnermodells entlang der noch freien Achse oder Achsen kann die Bedienperson bei der Wahl einer neuen weiteren Messstelle unterstützen.
- Wenn die Anzahl der Messstellen ausreichend ist: Welche Toleranz, z.B. 95% Konfidenzintervall, der Werkstücklage ergibt sich aufgrund der bekannten Messtoleranz der Messvorrichtung? Ergeben die bereits ausgewählten Messstellen eine messtechnisch günstige räumliche Anordnung?

Ein Ausführungsbeispiel der Erfindung ist exemplarisch in den beigefügten schematischen Zeichnungen dargestellt. Es zeigen:

Fig. 1 einen Industrieroboter,

Fig. 2 ein Rechnermodell eines Kotflügels und

Fig. 3 ein das erfindungsgemäße Verfahren veranschaulichendes Flussdiagramm.

Die Fig. 1 zeigt einen 6-Achs Industrieroboter 1 mit einer Kinematik für Bewegungen in sechs Freiheitsgraden. Der Industrieroboter 1 weist in allgemein bekannter Weise Gelenke 2 bis 4, Hebel 5, 6, sechs Bewegungsachsen A1

bis A6 und einen Flansch 7 auf.

Jede der Achsen A1 bis A6 wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter 1 weist ferner einen Steuerrechner 8 auf, der die Antriebe des Industrieroboters 1 in allgemein bekannter Weise mittels eines auf dem Steuerrechner 8 laufenden Rechnerprogramms steuert.

Im Falle des vorliegenden Ausführungsbeispieles ist der Industrieroboter 1 dafür vorgesehen, ein Objekt, das im Falle des vorliegenden Ausführungsbeispieles ein Kotflügel 9 ist, mit einem am Flansch 7 befestigten und in den Figuren nicht dargestellten Werkzeug zu bearbeiten. Während der Bearbeitung des Kotflügels 9 mit dem Werkzeug steuert der Steuerrechner 8 den Industrieroboter 1. Damit dies möglich ist, muss die Lage des Kotflügels 9, d.h. dessen Position und Orientierung relativ zum Industrieroboter 1, insbesondere zu dessen Bezugskoordinatensystem bekannt sein. Um die Lage des Kotflügels 9 relativ zum Bezugskoordinatensystem zu bestimmen, kann der Industrieroboter 1 in allgemein bekannter Weise Messstellen am Kotflügel 9 anfahren.

Um geeignete Messstellen am Kotflügel 9 zu ermitteln, ist im Falle des vorliegenden Ausführungsbeispieles im Steuerrechner 8 ein in der Fig. 2 näher dargestelltes CAD (Computer Aided Design) Modell 20 des Kotflügels 9 gespeichert, das mit einer mit dem Steuerrechner 8 verbundenen Anzeigevorrichtung 12 angezeigt werden kann.

Im Falle des vorliegenden Ausführungsbeispieles handelt es sich bei dem Modell 20 um ein sogenanntes Drahtgittermodell, bei dem Eckpunkte eines Objekts, im vorliegenden Falle also des Kotflügels 9, durch Linien miteinander verbunden sind oder reale Körperkanten dargestellt werden. Drahtgittermodelle sind in der 3-dimensionalen Darstellung in der Computergrafik allgemein bekannt.

Die Fig. 3 veranschaulicht anhand eines Flussdiagramms das Verfahren zum Ermitteln von Messstellen, die für die Bestimmung der Lage des Kotflügels 9 geeignet sind.

Zunächst werden die Geometrien des Kotflügels 9 in ein CAD (Computer Aided Design) Programm eingelesen, Schritt A des Flussdiagramms. Das CAD Programm erstellt daraufhin das CAD Modell 20 des Kotflügels 9. Das CAD Programm kann auf dem Steuerrechner 8 oder auf einem in den Figuren nicht näherdargestellten externen Rechner laufen.

Nach dem Einlesen der Geometrien des Kotflügels 9 wird dessen CAD Modell 20 mittels der mit dem Steuerrechner 8 verbundenen Anzeigevorrichtung 12 oder mittels einer nicht näher dargestellten Anzeigevorrichtung des externen Rechners dargestellt. Eine in den Figuren nicht näher dargestellte Bedienperson wählt daraufhin im CAD Modell 20 eine Messstelle 21 aus und konfiguriert die Anzahl der zu messenden Freiheitsgrade und die Position einer für die Vermessung des Kotflügels 9 am Flansch 7 befestigten Messvorrichtung 10 bezüglich des Koordinatensystems des Kotflügels 9. Je nach verwendeter Messvorrichtung 10 kann ein Freiheitsgrad oder es können zwei oder drei Freiheitsgrade für die Messung gewählt werden, Schritt B des Flussdiagramms.

Im Falle des vorliegenden Ausführungsbeispiels wählt die Bedienperson die Messstelle 21 mittels einer mit dem Steuerrechner 8 verbundenen Rechnermaus 11 als Beispiel einer Eingabevorrichtung aus, indem sie einen in die Anzeigevorrichtung 12 eingeblendeten, jedoch nicht näher dargestellten Cursor bewegt und die entsprechende Stelle im CAD Modell 20 anklickt, wodurch die Messstelle 21 ausgewählt ist.

Daraufhin überprüft automatisch ein auf dem Steuerrechner 8 bzw. auf dem externen Rechner laufendes Rechnerprogramm, ob die Anzahl ausgewählter Messstellen ausreicht, um die Lage des Kotflügels 9 zu bestimmen, und ob alle Freiheitsgrade der Lage des Kotflügels 9 bestimmt werden können, Schritt C des Flussdiagramms.

Im Falle des vorliegenden Ausführungsbeispiels erfolgt dieser Schritt durch Analysieren folgender Jacobimatrix *J*:

$$J = \frac{\partial \begin{pmatrix} S_1 \cdot F(\vec{x}_0, \vec{x}data_1) \\ S_2 \cdot F(\vec{x}_0, \vec{x}data_2) \\ \dots \\ S_n \cdot F(\vec{x}_0, \vec{x}data_n) \end{pmatrix}}{\partial x}$$

wobei

$$F(\vec{x}_0, \vec{x}data) = (S\ \ 0)\begin{pmatrix} T(x) \cdot \begin{pmatrix} xdata_1 \\ xdata_2 \\ xdata_3 \\ 1 \end{pmatrix} \end{pmatrix} = \begin{pmatrix} Tx \\ Ty \\ Tz \end{pmatrix} + R(Rx, Ry, Rz) \cdot \vec{x}data$$

wobei *T* eine homogene Transformationsmatrix ist, die Koordinaten des Kotflügels 9 in Koordinaten eines Koordinatensystems transformiert, das der für die Messstellen des Kotflügels 9 verwendeten Messvorrichtung 10 zugeordnet ist, $\vec{x}data_{1;2;..n}$ die Koordinaten der im CAD Modell 20 bis jetzt ausgewählten Messstellen sind, S eine Selektionsmatrix ist, die von Messachsen der verwendeten Messvorrichtung 10 abhängen,

$$\begin{pmatrix} Tx \\ Ty \\ Tz \end{pmatrix}$$

die Translation der Transformationsmatrix T beschreibt, *R* eine Rotationsmatrix darstellt, die die Rotation der Transformationsmatrix *T* beschreibt, und

$$\vec{x}_0 = \begin{pmatrix} 0 \\ 0 \\ 0 \\ 0 \\ 0 \\ 0 \end{pmatrix}$$

ist.

Die Selektionsmatrix *S* ergibt sich aus der gewählten Messvorrichtung 10.

Handelt es sich bei der Messvorrichtung 10 um eine Messvorrichtung, die einen dreidimensionalen Messwert ermittelt, wie dies beispielsweise beim Roboter Touch-Up der Fall ist, dann lautet die Selektionsmatrix

$$S = \begin{pmatrix} 1 & 0 & 0 \\ 0 & 1 & 0 \\ 0 & 0 & 1 \end{pmatrix}$$

Handelt es sich bei der Messvorrichtung 10 um eine Messvorrichtung, die einen zweidimensionalen Messwert ermittelt, wie dies beispielsweise bei einer Kamera als Messvorrichtung der Fall ist, dann lautet die Selektionsmatrix

$$S = \begin{pmatrix} 1 & 0 & 0 \\ 0 & 1 & 0 \end{pmatrix}$$

Handelt es sich bei der Messvorrichtung 10 um eine Messvorrichtung, die einen eindimensionalen Messwert ermittelt, wie dies beispielsweise bei einem Laserabstandssensor der Fall ist, dann lautet die Selektionsmatrix

$$S = \begin{pmatrix} 1 & 0 & 0 \end{pmatrix}$$

Anschließend überprüft das Rechnerprogramm den Rang der Jacobimatrix *J.*

Im Falle des vorliegenden Ausführungsbeispiels kann der Kotflügel 9 in sechs Freiheitsgraden bewegt werden. Daher kann die Lage des Kotflügels 9 ermittelt werden, wenn der Rang der Jacobimatrix *J* wenigstes gleich "6" ist.

Ist der Rang der Jacobimatrix *J* kleiner als "6", dann wird im Falle des vorliegenden Ausführungsbeispiels die Bedienperson mittels einer auf der Anzeigevorrichtung 12 eingeblendeten Nachricht aufgefordert, eine weitere Messstelle im CAD Modell 20 auszuwählen, was im Falle des vorliegenden Ausführungsbeispiel der Fall ist.

Daraufhin wählt die Bedienperson eine weitere Messstelle 22 im CAD Modell 20 aus und konfiguriert die Anzahl der zu messenden Freiheitsgrade und die Position der Messvorrichtung 10 bezüglich des Koordinatensystems des Kotflügels 9, Schritt B des Flussdiagramms.

Daraufhin überprüft das Rechnerprogramm automatisch, ob nun genügend Messstellen im CAD Modell 20 ausgewählt sind, sodass die Lage des Kotflügels 9 bestimmt werden kann, Schritt C des Flussdiagramms.

Dieser Schritt wird im Falle des vorliegenden Ausführungsbeispiels ausgeführt, indem wiederum die Jacobimatrix *J* für die bis jetzt ausgewählten Messstellen, also für die Messstellen 21, 22 aufgestellt und deren Rang ermittelt wird.

Die Schritte B und C des Flussdiagramms werden anschließend solange wiederholt, bis genügend Messstellen im CAD Modell 20 ausgewählt sind, sodass die Lage des Kotflügels 9 bestimmt werden kann. Dies ist der Fall, wenn der Rang der Jacobimatrix *J* wenigstens gleich "6" ist und im Falle des vorliegenden Ausführungsbeispiels zusätzlich zu den Messstellen 21, 22 noch Messstellen 23, 24 im CAD Modell 20 ausgewählt sind.

Im Falle des vorliegenden Ausführungsbeispiels erscheint auf der Anzeigevorrichtung 12 eine Nachricht, wenn genügend Messstellen 21-24 im CAD Modell 20 ausgewählt sind.

Anschließend wählt die Bedienperson eine weitere Messstelle 25 im CAD Modell 20 aus, um gegebenenfalls eine messtechnische Verbesserung für die Bestimmung der Lage des Kotflügels 9 zu erreichen, Schritt D des Flussdiagramms.

Ergibt die weitere Messstelle 25 keine Verbesserung der Bestimmung der Lage des Kotflügels 9, so wird die weitere Messstelle 25 verworfen, Schritt E des Flussdiagramms, und die Schritte B-D werden erneut durchgeführt.

Im Falle des vorliegenden Ausführungsbeispiels wird der Schritt D realisiert, indem das Rechnerprogramm die sogenannte Kondition der geometrischen Punkteanordnung der Jacobimatrix *J* vor der Auswahl der weiteren Messstelle 25 mit der Kondition der Jacobimatrix *J* nach der Auswahl der weiteren Messstelle 25 verglicht. Hat sich die Kondition verkleinert, dann wird die relevante weitere Messstelle 25 berücksichtigt, andernfalls verworfen, Schritt E.

Zusätzlich ist es im Falle des vorliegenden Ausführungsbeispiels noch vorgesehen, den Schritt D solange zu wiederholen, bis die Lage des Kotflügels 9 mit einer vorbestimmten Toleranz bestimmt werden kann. Dies ist im Falle des vorliegenden Ausführungsbeispiels dann der Fall, wenn die Kondition der Jacobimatrix *J* einen bestimmten Schwellenwert unterschreitet, der z.B. im Bereich zwischen 2,0 und 10,0 und für das vorliegenden Ausführungsbeispiel 5,0 ist.

Im Falle des vorliegenden Ausführungsbeispiels ist dies erreicht, wenn die Bedienperson die weitere Messstelle 25 und eine weitere Messstelle 26 im CAD Modell 20 ausgewählt hat. Die Bedienperson wird mit einer entsprechenden auf der Anzeigevorrichtung 12 eingeblendeten Nachricht darüber informiert.

Im Falle des vorliegenden Ausführungsbeispiels überprüft anschließend das Rechnerprogramm automatisch, ob die Lage des Kotflügels 9 mit den ausgewählten Messstellen 21-26 mit der Messvorrichtung 10 innerhalb einer geforderten Genauigkeit aufgrund einer Messtoleranz der Messvorrichtung 10 durchgeführt werden kann, Schritt G des Flussdiagramms. Ist dies nicht möglich, dann werden die Schritte B-F wiederholt.

Andernfalls wird im Falle des vorliegenden Ausführungsbeispiels in einem Schritt G des Flussdiagramms eine Liste 13 mit der Anzeigevorrichtung 12 angezeigt, die die Messstellen 21-26 nach messtechnischer Relevanz anzeigt.

Der Schritt G wird im Falle des vorliegenden Ausführungsbeispiels ausgeführt, indem das Rechnerprogramm die Jacobimatrix *J* basierend auf den Messstellen 21-26 mittels Dreieckszerlegung mit Zeilenzuordnung, beispielsweise mittels QR-Zerlegung nach Householder zerlegt, wodurch eine $m \times m$ Permutationsmatrix *P* mit *m* Zeilenvertauschungen nach Kriterien der numerischen Stabilität entsteht. Die Kondition der Jacobimatrix *J* bleibt unverändert, sodass

$$Q \cdot R \cdot P = J$$

ist, wobei $Q$ und $R$ ebenfalls Matrizen sind.

Aus der Permutationsmatrix $P$ werden die zur optimalen Lösung notwendigen eindimensionalen Messwerte der (1D, 2D oder 3D) Messstellen 21-26 bestimmt.

Die Zeilennummer $i$ der notwendigen Gleichungen = Index der notwendigen eindimensionalen Messwerte kann der Permutationsmatrix $P$ entnommen werden. Daraus ergibt sich die Liste 13 der geeigneten Messstellen.

Danach kann der Kotflügel 9 mittels der Messvorrichtung 10 aufgrund der Messstellen 21-26 vermessen werden, Schritt H des Flussdiagramms, und die Berechnung der Lage des Kotflügels mit einer Angabe des Konfidenzintervalls, z.B. 95%, angegeben werden, Schritt I des Flussdiagramms.

Im beschriebenen Ausführungsbeispiel wählt die Bedienperson die Messstellen 21-26 im CAD Modell 20 durch Anklicken aus. Um z.B. zu verhindern, dass die Bedienperson eine Messstelle auswählt, die mit der Messvorrichtung 10 nicht erreicht werden kann, kann es vorgesehen sein, mögliche auszuwählende Messstellen im CAD Modell 20 beispielsweise farblich hervorzuheben oder in die Anzeigevorrichtung 12 vor der Auswahl der Messstellen 21-26 eine Liste 14 einzublenden, die mögliche auszuwählende Messstellen anzeigt.

Aus der Liste 14 kann die Bedienperson nacheinander die Messstellen 21-26 auswählen. Es ist aber auch möglich, dass die Bedienperson zu Beginn mehrere potenzielle Messstellen z.B. aus der Liste 14 auswählt und anschließend das Rechnerprogramm zum Ermitteln der geeigneten Messstellen im Schritt B des Flussdiagramms nacheinander eine der potenziellen Messstellen auswählt, bis die geeigneten Messstellen 21-26 ermittelt wurden.

## Patentansprüche

1. Verfahren zum Ermitteln von Messstellen an einem Objekt, aufweisend folgende Verfahrensschritte:

   a) Auswählen von mehreren Messstellen (21-24) eines physikalischen Objekts (9) in einem grafischen Rechnermodell (20) des physikalischen Objekts (9) solange, bis genügend Messstellen (21-24) ausgewählt sind, um die Lage des Objekts (9) bezüglich eines Bezugskoordinatensystems zu ermitteln, wobei automatisch ein Rechnerprogramm ermittelt, wenn genügend Messstellen (21-24) ausgewählt sind,
   b) nachdem für das Ermitteln der Lage des Objekts (9) genügend Messstellen (21-24) ausgewählt wurden, Auswählen einer weiteren Messstelle (25, 26) des Objekts (9) im grafischen Rechnermodell (20) und automatisches Überprüfen mittels des Rechnerprogramms, ob durch die weitere Messstelle (25, 26) die Lage des Objekts (9) bezüglich des Bezugskoordinatensystem genauer bestimmbar ist,
   c) Berücksichtigen der weiteren Messstelle (25, 26) für die Bestimmung der Lage des Objekts (9), wenn durch die weitere Messstelle (25, 26) die Lage besser bestimmbar ist, und
   d) Wiederholen der Verfahrensschritte b) und c) solange, bis die Lage des Objekts (9) besser als mit einer vorgegebenen Toleranz bestimmbar ist.

2. Verfahren nach Anspruch 1, bei dem das Rechnermodell (20) in einer Steuervorrichtung (8) eines Industrieroboters (1) gespeichert ist.

3. Verfahren nach Anspruch 1 oder 2, aufweisend Auswählen der Messstellen (21-24) und der weiteren Messstelle (25, 26) aus einer Liste (14) möglicher Messstellen und/oder markieren der Messstellen und der weiteren Messstellen im Rechnermodell (20).

4. Verfahren nach einem der Ansprüche 1 bis 3, bei dem mögliche Messstellen im Rechnermodell (20) hervorgehoben sind.

5. Verfahren nach einem der Ansprüche 1 bis 4, aufweisend

   - Erstellen einer Jacobimatrix $J$

$$J = \frac{\partial \begin{pmatrix} S_1 \cdot F(\vec{x}_0, \vec{x}data_1) \\ S_2 \cdot F(\vec{x}_0, \vec{x}data_2) \\ \ldots \\ S_n \cdot F(\vec{x}_0, \vec{x}data_n) \end{pmatrix}}{\partial x}$$

wobei

$$F(\vec{x}_0, \vec{x}data) = (S \;\; 0)\left( T(x) \cdot \begin{pmatrix} xdata_1 \\ xdata_2 \\ xdata_3 \\ 1 \end{pmatrix} \right)$$

wobei *T* eine Transformationsmatrix ist, die Koordinaten des Objekts (9) in Koordinaten eines Koordinatensystems transformiert, das einer für die Messstellen des Objekts (9) verwendeten Messvorrichtung (10) zugeordnet ist, $\vec{x}data_{1;2;..n}$ die Koordinaten der im Rechenmodell (20) ausgewählten Messstellen (21-24) sind, *S* eine Selektionsmatrix ist, die von Messachsen der verwendeten Messvorrichtung (10) abhängen, und

$$\vec{x}_0 = \begin{pmatrix} 0 \\ 0 \\ 0 \\ 0 \\ 0 \\ 0 \end{pmatrix}$$

ist, und
- Überprüfen des Rangs der Jacobimatrix *J* und Auswählen von Messstellen (21-24) solange, bis der Rang der Jacobimatrix *J* wenigstens gleich der Anzahl möglicher Freiheitsgrade des Objekts (9) entspricht.

**6.** Verfahren nach Anspruch 5, aufweisend:

- Vergleichen der Kondition der geometrischen Punkteanordnung der Jacobimatrix *J* vor der Auswahl der weiteren Messstelle (25, 26) mit der Kondition der Jacobimatrix *J* nach der Auswahl der weiteren Messstelle (25, 26) und
- Berücksichtigen der weiteren Messstelle (25, 26), wenn die Kondition der geometrischen Punkteanordnung der Jacobimatrix *J* vor der Auswahl der weiteren Messstelle (25, 26) größer als die Kondition der Jacobimatrix *J* nach der Auswahl der weiteren Messstelle (25, 26) ist.

**7.** Verfahren nach Anspruch 5 oder 6, aufweisend Wiederholen der Verfahrensschritte b) und c) solange, bis die Kondition der Jacobimatrix *J* einen vorgegebenen Wert unterschreitet.

**8.** Verfahren nach Anspruch 7, bei dem der vorgegebene Wert im Bereich zwischen 2,0 und 10,0 liegt oder insbesondere 5,0 beträgt.

**9.** Verfahren nach einem der Ansprüche 1 bis 8, aufweisend folgende Verfahrensschritte:

e) nachdem genügend Messstellen (21-26) ermittelt wurden, sodass die Lage des Objekts (9) besser als mit der vorgegebenen Toleranz bestimmbar ist, Ermitteln mittels des Rechnerprogramms, ob mittels einer zum Vermessen des Objekts (9) mittels der Messstellen (21-26) vorgesehenen Messvorrichtung (10) die Lage des Objekts (9) innerhalb einer vorgegebenen Messtoleranz bestimmbar ist, und
f) Wiederholen der Verfahrensschritte b) bis e), bis die Lage des Objekts (9) mittels der Messvorrichtung (10) innerhalb der vorgegebenen Messtoleranz bestimmbar ist.

**10.** Verfahren nach eine der Ansprüche 1 bis 9, aufweisend Anzeigen und/oder Ausgeben der Messstellen (21-24) und der berücksichtigten weiteren Messstellen (25, 26).

**11.** Verfahren nach Anspruch 10, aufweisend Ordnen der ausgegebenen und/oder angezeigten Messstellen (21-24) und berücksichtigten weiteren Messstellen (25, 26) nach messtechnischer Relevanz.

**12.** Verfahren nach Anspruch 11, bei dem die Messstellen (21-24) und berücksichtigten weiteren Messstellen (25, 26) mittels QR-Zerlegung der Jacobimatrix *J* ermittelt werden.

**13.** Verfahren nach einem der Ansprüche 1 bis 12, aufweisend Auswählen der Messstellen (21-24) und einer Mehrzahl von weiteren Messstellen (25, 26) aus einer Mehrzahl möglicher Messstellen vor dem Durchführen des Verfahrensschrittes a).

**14.** Verfahren nach einem der Ansprüche 1 bis 13, bei dem die Messstellen (21-24) und die weitere Messstelle (25, 26) folgende Korrespondenzen aufweisen: Punkt zu Punkt, Punkt zu Ebene, Punkt zu Kante und/oder Punkt zu Linie.

## Claims

**1.** A method for determining measuring points on an object, comprising the steps of:

a) selecting from several measuring points (21-24) of a physical object (9) in a graphical computer model (20) of the physical object (9) as long as and until sufficient measuring points (21-24) have been selected, in order to determine the position and orientation of the object (9) relative to a coordinate system, wherein by means of a computer program it is automatically determined, when sufficient measuring points (21-24) have been selected,
b) after sufficient measuring points (21-24)have been selected for the determination of the position and orientation of the object(9), selecting of a further measuring point (25, 26) of the object(9) in the graphical computer model (20) and automatic checking by means of the computer program, whether by means of the further measuring point (25, 26) a more accurate determination of the position and orientation of the object (9) relative to the reference coordinate system can be made,
c) considering of the further measuring point (25, 26) for the determination of the position and orientation of the object(9), when a more accurate determination of the position and orientation is possible by means of the further measuring point (25, 26), and
d) repeating of steps b) and c) as long as and until the position and orientation of the object (9) can be determined better than by means of a predefined tolerance.

**2.** The method of claim 1, in which the computer model (20) is stored in a control device (8) of an industrial robot (1).

**3.** The method of claim 1 or 2, comprising selecting of the measuring points (21-24) and of the further measuring point (25, 26) from a list (14) of possible measuring points and /or marking of the measuring points and of the further measuring points in a computer model (20).

**4.** The method of any of claims 1 to 3, in which possible measuring points in the computer model (20) are highlighted.

**5.** The method of any of claims 1 to 4, comprising

- establishing of a Jacobian matrix *J*

$$J = \frac{\partial \begin{pmatrix} S_1 \cdot F(\vec{x}_0, \vec{x}data_1) \\ S_2 \cdot F(\vec{x}_0, \vec{x}data_2) \\ \cdots \\ S_n \cdot F(\vec{x}_0, \vec{x}data_n) \end{pmatrix}}{\partial x}$$

wherein

$$F(\vec{x}_0, \vec{x}data) = (S \ \ 0)\left( T(x) \cdot \begin{pmatrix} xdata_1 \\ xdata_2 \\ xdata_3 \\ 1 \end{pmatrix} \right)$$

wherein T is a transformation matrix, which transforms the coordinates of the object (9) into coordinates of a coordinates system, which is assigned to one of the measuring points of the object (9) of the utilized measurement device (10), $\vec{x}data_{1;2;..n}$ *are* the coordinates in the computer model (20) of the selected measuring points (21-24), S is a selection matrix, dependent upon the measurement axes of the applied measurement device (10), and

$$\vec{x}_0 = \begin{pmatrix} 0 \\ 0 \\ 0 \\ 0 \\ 0 \\ 0 \end{pmatrix}$$

is, and

- checking of the Jacobian matrix *J* and selecting from measuring points (21-24) until the rank of the Jacobian matrix *J* corresponds to at least the same number of the possible degrees of freedom of the object (9).

**6.** The method of claim 5, comprising :

- comparing of the condition of the geometric point arrangement of the Jacobian matrix *J* before the selection of the further measuring point (25, 26) under the condition of the Jacobian matrix J after the selection of the further measuring point (25, 26) and
- considering of the further measuring point (25, 26), when the condition of the geometric point arrangement of the Jacobian matrix *J* before the selection of the further measuring point (25, 26) is greater than the condition of the Jacobian matrix *J* after the selection of the further (25, 26) point.

**7.** The method of claim 5 or 6, comprising repeating of steps b) and c) as long as and until the condition of the Jacobian matrix *J* has exceeded a predefined value.

**8.** The method of claim 7, in which of the predefined value ranges between 2,0 and 10,0 or in particular amounts to 5,0.

**9.** The method of any of claims 1 to 8, comprising the following steps :

e) after sufficient measuring points (21-26) have been determined, so that the position and orientation of the object (9) can be better determined than by means of the predefined tolerance, determining by means of the computer program, whether by means of a measuring device (10) foreseen for the measuring of the object(9) by means of the measuring points (21-26) the position and orientation of the object (9) within a predefined measurement tolerance is determinable, and
f) repeating of steps b) to e), until the position of the object (9) can be determined by means of measurement device (10) within of the predefined measurement tolerance.

**10.** The method of any of claims 1 to 9, comprising displaying and/or issuing of the measuring points (21-24) and of the considered further measuring points (25, 26).

**11.** The method of claim 10, comprising ordering of the displayed and/or issued measuring points (21-24) and considered further measuring points (25, 26) according to measurement technical relevancy.

**12.** The method of claim 11, by which the measuring points (21-24) and the considered further measuring points (25, 26) can be determined by means of QR-decomposition of the Jacobian matrix J.

**13.** The method of any of claims 1 to 12, comprising selecting of the measuring points (21-24) and a plurality of further measuring points (25, 26) from a plurality of possible measuring points before conducting of the step a).

**14.** The method of any of claims 1 to 13, by which the measuring points (21-24) and the further measuring point (25, 26) comprise the following correspondences: point to point, point to surface, point to edge and /or point to line.

**Revendications**

**1.** Procédé pour déterminer des points de mesure sur un objet, présentant les étapes de procédé suivante :

a) choix de plusieurs points de mesure (21-24) d'un objet physique (9) dans un modèle graphique d'ordinateur (20) de l'objet physique (9) jusqu'à ce qu'un nombre suffisant de point de mesure (21-24) soient choisis pour déterminer la position de l'objet (9) par rapport à un système de coordonnées de référence, un programme d'ordinateur étant automatiquement déterminé si un nombre suffisant de points de mesure (21-24) sont choisis,
b) après avoir choisi un nombre suffisant de points de mesure (21-24) pour déterminer la position de l'objet (9), choix d'un autre point de mesure (25, 26) de l'objet (9) dans le modèle graphique d'ordinateur (20), et vérification automatique au moyen du programme d'ordinateur si grâce à l'autre point de mesure (25, 26), la position de l'objet (9) par rapport au système de coordonnées de référence peut être déterminée de manière plus précise,
c) prise en compte de l'autre point de mesure (25, 26) pour déterminer la position de l'objet (9) si grâce à l'autre point de mesure (25, 26), la position peut mieux être déterminée, et
d) répétition des étapes de procédé b) et c) jusqu'à ce que la position de l'objet (9) puisse être mieux déterminée qu'avec une tolérance prescrite.

**2.** Procédé selon la revendication 1, dans lequel le modèle d'ordinateur (20) est mémorisé dans un dispositif de commande (8) d'un robot industriel (1).

**3.** Procédé selon la revendication 1 ou 2, présentant le choix de points de mesure (21-24) et de l'autre point de mesure (25, 26) parmi une liste (14) de points de mesure possible et/ou le marquage des points de mesure et de l'autre point de mesure dans le modèle ordinateur (20).

**4.** Procédé selon l'une des revendications 1 à 3, dans lequel des points de mesure possibles sont mis en valeur dans le modèle d'ordinateur (20).

**5.** Procédé selon l'une des revendications 1 à 4, présentant:

- la création d'une matrice de Jacobi *J*

$$J = \frac{\partial \begin{pmatrix} S_1 \cdot F(\vec{x}_0, \vec{x}data_1) \\ S_2 \cdot F(\vec{x}_0, \vec{x}data_2) \\ \cdots \\ S_n \cdot F(\vec{x}_0, \vec{x}data_n) \end{pmatrix}}{\partial x}$$

dans laquelle

$$F(\vec{x}_0, \vec{x}data) = (S \;\; 0)\left( T(x) \cdot \begin{pmatrix} xdata_1 \\ xdata_2 \\ xdata_3 \\ 1 \end{pmatrix} \right)$$

T étant une matrice de transformation qui transforme des coordonnées de l'objet (9) en des coordonnées d'un système de coordonnées qui est associé à un dispositif de mesure (10) utilisé pour les points de mesure de l'objet (9), $\vec{x}data_{1;2;..n}$ étant les coordonnées des points de mesure (21-24) choisis dans le modèle d'ordinateur (20), S étant une matrice de sélection qui dépend d'axes de mesure du dispositif de mesure (10) utilisé, et dans la formule suivante

$$\vec{x}_0 = \begin{pmatrix} 0 \\ 0 \\ 0 \\ 0 \\ 0 \\ 0 \end{pmatrix},$$

et
- la vérification du rang de la matrice de Jacobi *J et* on choisit des points de mesure (21-24) jusqu'à ce que le rang de la matrice de Jacobi *J* corresponde au moins au nombre de degrés de liberté possibles de l'objet (9).

**6.** Procédé selon la revendication 5, présentant :

- la comparaison de la condition de l'agencement géométrique des points de la matrice de Jacobi *J* avant de choisir l'autre point de mesure (25, 26) avec la condition de la matrice de Jacobi *J* après avoir choisi l'autre point de mesure (25, 26), et
- la prise en compte de l'autre point de mesure (25, 26), si la condition de l'agencement géométrique des points de la matrice de Jacobi *J* avant de choisir l'autre point de mesure (25, 26) est supérieure à la condition de la matrice de Jacobi *J* après avoir choisi l'autre point de mesure (25, 26).

**7.** Procédé selon la revendication 5 ou 6, présentant la répétition des étapes de procédé b) et c) jusqu'à ce que la matrice de Jacobi *J* soit inférieure à une valeur prédéterminée.

**8.** Procécé selon la revendication 7, dans lequel la valeur prédéterminée est située dans la plage entre 2,0 et 10,0 ou est en particulier de 5,0.

**9.** Procédé selon l'une des revendications 1 à 8, présentant les étapes de procédé suivantes :

e) après avoir déterminé un nombre suffisant de points de mesure(21-26), de telle sorte que la position de l'objet (9) puisse être mieux déterminée qu'avec la tolérance prédéterminée, détermination au moyen du programme d'ordinateur si au moyen d'un dispositif de mesure (10) prévu pour mesurer l'objet (9) au moyen des points de mesure (21-26), la position de l'objet (9) peut être déterminée dans les limites d'une tolérance de mesure prédéterminée, et
f) répétition des étapes de procédé b) à e), jusqu'à ce que la position de l'objet (9) puisse être déterminée au moyen du dispositif de mesure (10) dans les limites de la tolérance de mesure prédéterminée

**10.** Procédé selon l'une des revendications 1 à 9, présentant l'indication et/ou l'affichage des points de mesure (21-24) et des autres points de mesure (25, 26) pris en compte.

**11.** Procédé selon la revendication 10, présentant le classement des points de mesure (21-24) indiqués et/ou affichés et des autres points de mesure (25, 26) pris en compte d'après leur importance du point de vue technique de mesure.

**12.** Procédé selon la revendication 11, dans lequel les points de mesure (21-24) et les autres points de mesure (25, 26) pris en compte sont déterminés par des moyens de décomposition QR de la matrice de Jacobi J.

**13.** Procédé selon l'une des revendications 1 à 12, présentant le choix des points de mesure (21-24) et une multitude d'autres points de mesure (25, 26) parmi une multitude de points de mesure possibles avant de mettre en oeuvre l'étape de procédé a).

**14.** Procédé selon l'une des revendications 1 à 13, dans lequel les points de mesure (21-24) et les autres points de mesure (25, 26) présentent les correspondances suivantes: point à point, point à plan, point à arête, et/ou point à ligne.

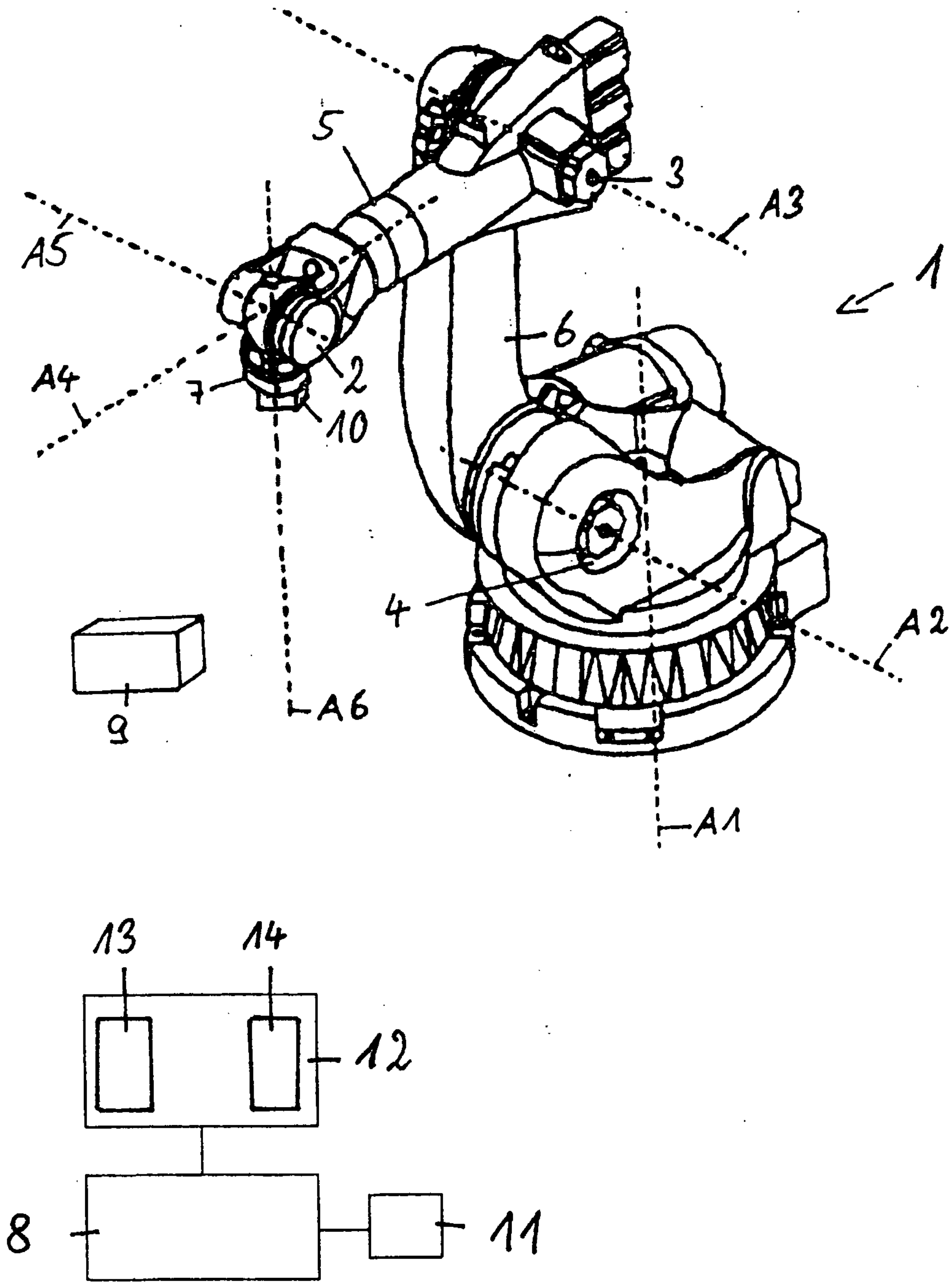


FIG. 1

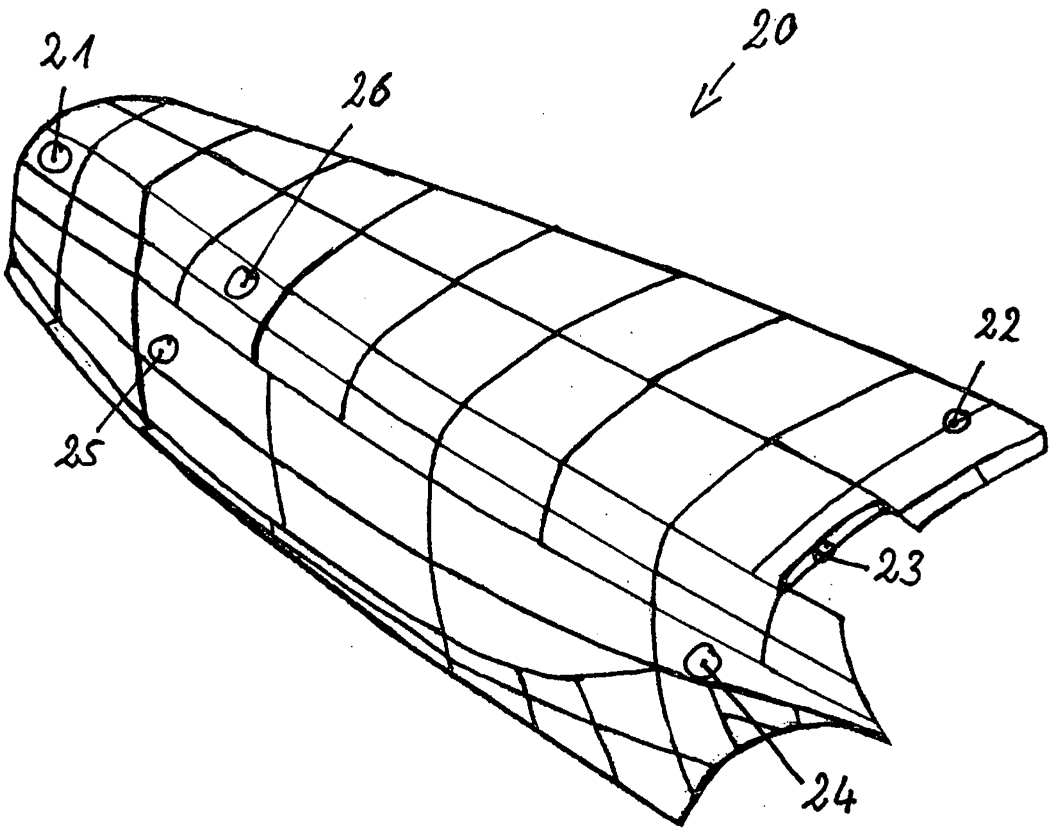


FIG. 2

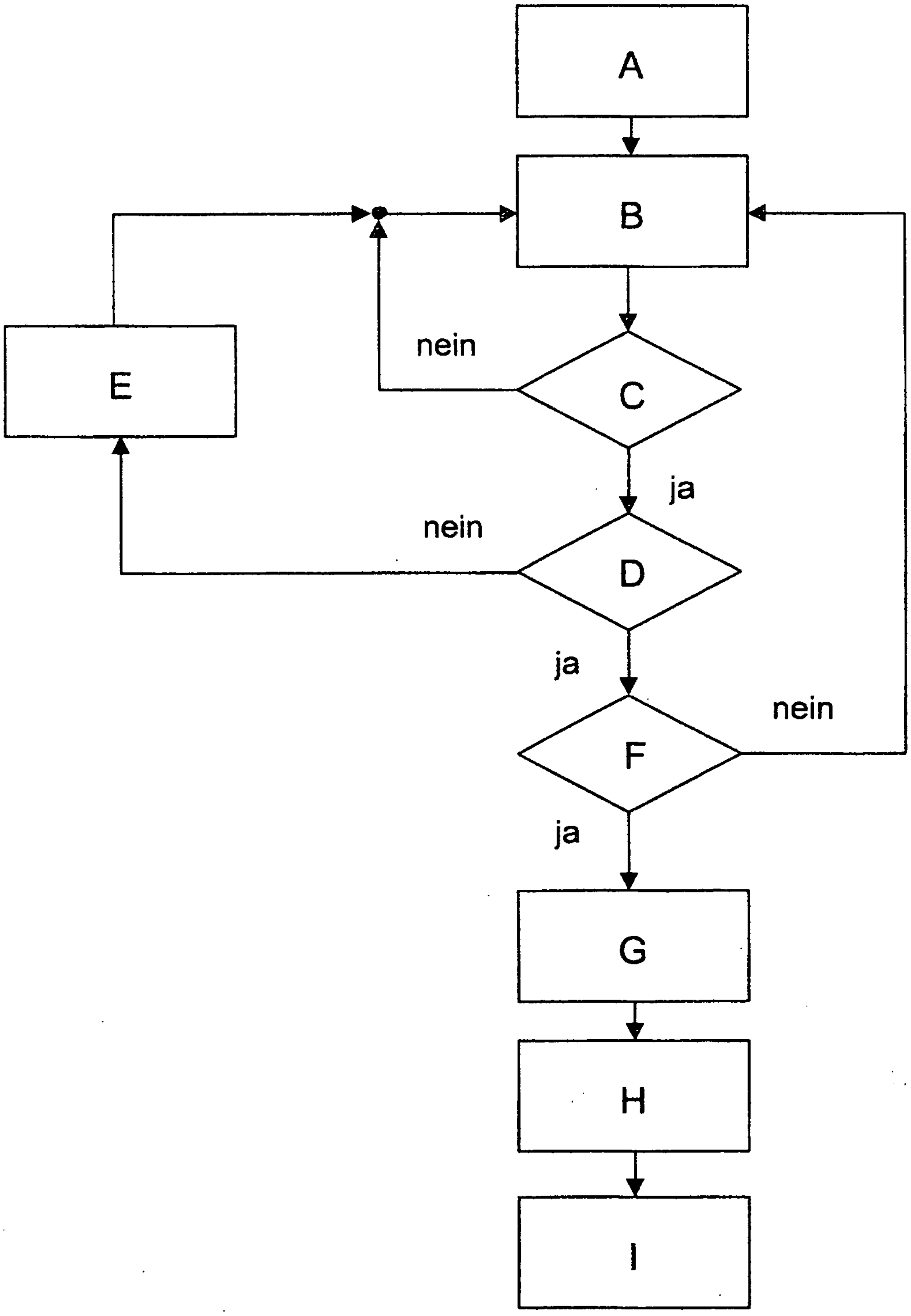


FIG. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004071717 A1
- JP 6307842 A